(19) Europäisches Patentamt
European Patent Office
Office européen des brevets

(11) **EP 2 947 433 A1**

(12) **DEMANDE DE BREVET EUROPEEN**

(43) Date de publication:
**25.11.2015 Bulletin 2015/48**

(51) Int Cl.:
***G01J 3/28*** *(2006.01)*        *G01J 3/12* *(2006.01)*

(21) Numéro de dépôt: **15168023.8**

(22) Date de dépôt: **18.05.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **19.05.2014 FR 1454453**

(71) Demandeur: **COMMISSARIAT A L'ENERGIE ATOMIQUE ET AUX ENERGIES ALTERNATIVES
75015 Paris (FR)**

(72) Inventeurs:
• **Laforest, Timothé**
**71220 SIVIGNON (FR)**
• **Dupret, Antoine**
**91400 ORSAY (FR)**
• **Guicquero, William**
**91440 BURES-SUR-YVETTE (FR)**
• **Verdant, Arnaud**
**38330 SAINT NAZAIRE LES EYMES (FR)**

(74) Mandataire: **Thibon, Laurent
Cabinet Beaumont
1, rue Champollion
38000 Grenoble (FR)**

(54) **SYSTÈME ET PROCÉDÉ D'ACQUISITION D'IMAGES HYPERSPECTRALES**

(57)    L'invention concerne un système d'acquisition d'une image hyperspectrale (x), comportant : un capteur (101) d'images en niveaux de gris ; et un élément (105) diffuseur et dispersif placé sur le trajet optique entre le capteur (101) et une scène (103), cet élément (105) comprenant une matrice de cellules à cristaux liquides commandables individuellement, dans lequel chaque cellule peut recevoir une tension de commande choisie parmi une série d'au moins trois tensions de commande distinctes.

Fig 1

**Description**

Domaine

La présente demande concerne un système et un procédé d'acquisition d'images hyperspectrales ou multispectrales, et la calibration d'un tel système ou procédé.

Exposé de l'art antérieur

On appelle généralement image hyperspectrale ou multispectrale d'une scène une série de plusieurs images élémentaires en deux dimensions de la scène, chaque image représentant une composante de la scène dans une bande restreinte de longueurs d'ondes. Chaque image élémentaire correspond généralement à l'intégration de l'intensité lumineuse dans une bande spectrale spécifique. Dans la suite, l'expression "image hyperspectrale" est considérée comme étant équivalente à l'expression "image multispectrale", et désigne une série d'au moins deux images élémentaires d'une même scène dans des bandes de longueurs d'ondes distinctes.

Pour acquérir une image hyperspectrale, une méthode consiste à acquérir successivement les différentes images de la série à l'aide d'un capteur d'images, en disposant à chaque acquisition, entre la scène et le capteur, un filtre optique passe bande de bande passante étroite, par exemple de quelques nanomètres à quelques dizaines de nanomètres, correspondant à l'une des composantes de l'image hyperspectrale. A chaque nouvelle acquisition, un nouveau filtre est disposé entre la scène et le capteur, de façon à sélectionner successivement les différentes bandes de longueurs d'ondes de l'image hyperspectrale.

Un inconvénient majeur de cette méthode réside dans la nécessité de faire défiler successivement les différents filtres optiques entre la scène et le capteur. Il en résulte des systèmes d'acquisition relativement encombrants et des temps d'acquisition relativement longs. Une fois l'acquisition terminée, l'information contenue dans chaque image élémentaire correspond à l'intégration de l'intensité lumineuse dans la bande passante du filtre correspondant.

Une autre méthode consiste à utiliser, à la place du filtre, un prisme, pour disperser spatialement les différentes longueurs d'ondes de la scène. Un système matriciel d'obturateurs programmables, du type couramment désigné dans la technique par l'acronyme SLM (de l'anglais "Spatial Light Modulator" - modulateur spatial de lumière) peut être placé entre la scène et le prisme, en amont du capteur d'images. Le SLM est par exemple constitué par une matrice de micro-miroirs ou par une matrice de cellules à cristaux liquides. En fonction des résolutions spatiale et spectrale recherchées, une acquisition ou un nombre restreint (c'est-à-dire inférieur au nombre total de bandes spectrales de l'image hyperspectrale) d'acquisitions peut suffire pour reconstruire l'image hyperspectrale. Ce type de méthode est généralement désignée dans la technique par l'acronyme CASSI (de l'anglais "Coded Aperture Snapshot Spectral Imaging" - imagerie spectrale instantanée par ouverture codée).

Un inconvénient de cette méthode réside toutefois dans la complexité du système optique nécessaire pour réaliser l'acquisition, et dans la résolution, relativement faible, des images élémentaires qui peuvent être acquises simultanément par le capteur.

D'autres méthodes ont été proposées, par exemple dans l'article intitulé "Compressive sensing spectrometry based on liquid crystal devices" de Yitzhak August et al., utilisant les théories de l'acquisition compressive pour reconstruire les différentes composantes d'un spectre étendu à partir d'un nombre réduit d'acquisitions. Dans l'article susmentionné, un filtre à cristaux liquides commandable électriquement est disposé entre la scène et un capteur d'images. Lors d'une acquisition, une tension de commande est appliquée au filtre, de façon que ce dernier sélectionne non pas une bande passante étroite, comme dans les méthodes traditionnelles, mais une bande passante large de forme irrégulière, correspondant à une juxtaposition des longueurs d'ondes des différentes composantes de l'image hyperspectrale auxquelles sont affectés des coefficients de pondération. Plusieurs acquisitions sont successivement effectuées, en modifiant à chaque fois la commande du filtre à cristaux liquides, ce qui revient à modifier la réponse du filtre et donc les coefficients de pondération affectés aux composantes de l'image hyperspectrale. Les auteurs ont montré qu'en utilisant les modèles mathématiques de l'acquisition compressive, il est possible de reconstruire une série de composantes élémentaires du spectre étendu à partir d'un nombre d'acquisition inférieur au nombre total de bandes spectrales de la série reconstruite.

Un inconvénient de cette méthode réside toutefois dans la complexité de la calibration des filtres à cristaux liquides, et dans les possibilités réduites en termes de compression ou de super-résolution.

Il existe un besoin pour un système et un procédé d'acquisition d'images hyperspectrales, palliant tout ou partie des inconvénients des solutions connues.

Résumé

Ainsi, un mode de réalisation prévoit un système d'acquisition d'une image hyperspectrale, comportant : un capteur d'images ; un élément diffuseur et dispersif placé sur le trajet optique entre le capteur et une scène, cet élément comprenant une matrice de cellules à cristaux liquides, chaque cellule étant commandable individuellement pour faire varier son indice de réfraction ; un module de commande adapté à commander le capteur et l'élément pour acquérir successivement un nombre entier M supérieur à 1 d'images élémentaires de la scène, en modifiant entre deux acquisitions successives un jeu de signaux de commandes appliqués aux différentes cellules de l'élément ; et un module de traitement adapté à reconstruire l'image hyperspectrale à partir des M images élémentaires acquises par le capteur.

Selon un mode de réalisation, pour chaque jeu de commandes appliquée à l'élément, l'élément présente des fonctions d'étalement de point différentes pour différentes bandes spectrales de l'image hyperspectrale.

Selon un mode de réalisation, les M jeux de commandes appliqués à l'élément diffuseur et dispersif sont tels que la matrice d'acquisition, constituée par la concaténation des représentations des MxK fonctions d'étalement de point de l'élément, correspondant aux M commandes appliquées et à K bandes spectrales de l'image hyperspectrale, avec K entier supérieur à 1, soit de rang maximal par rapport à sa taille.

Selon un mode de réalisation, les M jeux de commandées appliquées à l'élément diffuseur et dispersif sont tels que les MxK fonctions d'étalement de point de l'élément, correspondant aux M commandes appliquées et à K bandes spectrales de l'image hyperspectrale, avec K entier supérieur à 1, soient toutes différentes les unes des autres.

Un autre mode de réalisation prévoit un procédé de commande du système susmentionné, comportant une phase d'acquisition au cours de laquelle le capteur et l'élément sont commandés pour acquérir successivement un nombre entier M supérieur à 1 d'images élémentaires de la scène, en modifiant entre deux acquisitions successives le jeu $(C_m)$ de signaux de commande appliqués aux différentes cellules de l'élément.

Selon un mode de réalisation, le procédé de commande comporte en outre une phase de reconstruction de l'image hyperspectrale à partir des M images élémentaires acquises pendant la phase d'acquisition.

Selon un mode de réalisation, le procédé de commande comporte en outre une phase préalable de calibration au cours de laquelle les MxK fonctions d'étalement de point de l'élément, correspondant aux M jeux de commandes appliquées et à K bandes spectrales de l'image hyperspectrale, avec K entier supérieur à 1, sont déterminées.

Selon un mode de réalisation, la phase de calibration comprend l'acquisition successivement par le capteur de MxK images de taches résultant de la diffusion, par l'élément, pour les M jeux de commandes de l'élément et pour les K bandes spectrales lumineuses de l'image hyperspectrale, d'une source lumineuse ponctuelle réglable en longueur d'onde ou dont la signature spectrale est connue et réglable.

Selon un mode de réalisation, les MxK images acquises lors de la phase de calibration sont mises en correspondance avec un modèle comportemental théorique de l'élément.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente de façon schématique et partielle un exemple d'un mode de réalisation d'un système d'acquisition d'images hyperspectrales ;
la figure 2 est un schéma illustrant le principe de fonctionnement du système d'acquisition d'images hyperspectrales de la figure 1 ; et
la figure 3 représente de façon schématique et partielle le système d'acquisition d'images hyperspectrales de la figure 1 pendant une phase de calibration.

Description détaillée

Par souci de clarté, de mêmes éléments ont été désignés par de mêmes références aux différentes figures.

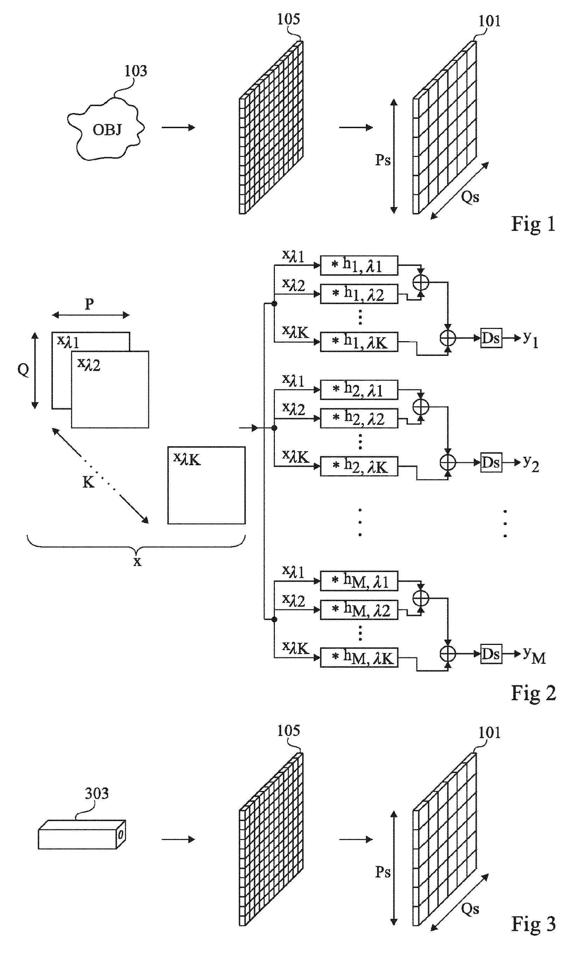

La figure 1 représente de façon schématique et partielle un exemple d'un mode de réalisation d'un système d'acquisition d'images hyperspectrales.

Le système de la figure 1 comprend un capteur d'images 101, par exemple une matrice de photodétecteurs, adapté à fournir des images en niveau de gris. Le capteur d'images 101 est un capteur large bande, c'est-à-dire qu'il est sensible à toutes les longueurs d'ondes des images hyperspectrales que l'on souhaite acquérir.

Le système de la figure 1 comprend en outre, sur le trajet optique entre le capteur 101 et un objet ou une scène 103 (OBJ) dont on souhaite acquérir une image hyperspectrale, un élément diffuseur et dispersif programmable 105, comprenant une matrice de cellules à cristaux liquides commandables individuellement pour faire varier leurs indices de réfraction. Les cristaux liquides de l'élément 105 sont des cristaux liquides présentant un indice de réfraction dépendant de la longueur d'onde, et de préférence des cristaux liquides dont la dispersion en longueur d'onde varie en fonction de la tension de polarisation appliquée, par exemple des cristaux liquides du type commercialisé par la société MERCK sous la référence TL216 ou sous la référence E44. A titre d'exemple non limitatif, chaque cellule élémentaire peut présenter des dimensions de l'ordre de 1 à 10 μm pour des applications dans le domaine du visible. En pratique, l'élément 105 peut comprendre une couche continue de cristaux liquides dont une première face est revêtue par une électrode commune continue et dont une deuxième face opposée à la première face est recouverte par un réseau matriciel d'électrodes élémentaires discrètes commandables individuellement. Dans ce cas, une cellule élémentaire de l'élément 105 est constituée par la portion de la couche de cristaux liquides disposée entre une électrode élémentaire et l'électrode commune.

Dans cet exemple, l'objet 103 dont on souhaite acquérir une image hyperspectrale est supposé être situé à l'infini. Le cas échéant, un système optique complémentaire, non représenté, peut être disposé entre l'objet et l'élément 105 de façon que l'objet 103 apparaisse à l'infini du point de vue de l'élément 105.

Le système de la figure 1 peut en outre comprendre une ou plusieurs mémoires (non représentées) adaptées à stocker une ou plusieurs images numériques acquises par le capteur 101, un module de calcul (non représenté), par exemple un microprocesseur, adapté à traiter des images acquises par le capteur 101, et/ou un module de commande du capteur 101 et de l'élément diffuseur et dispersif 105.

Le fonctionnement du système de la figure 1 va maintenant être décrit.

Lors d'une phase d'acquisition d'une image hyperspectrale de l'objet 103, le capteur 101 acquière successivement M images $y_m$ de l'objet 103 vu à travers l'élément diffuseur et dispersif 105, où M est un nombre entier supérieur à 1 et m est un nombre entier compris dans la plage allant de 1 à M.

Lors de l'acquisition d'une image $y_m$, l'élément diffuseur et dispersif 105 est modulé par une commande $C_m$, c'est-à-dire un jeu de signaux de commande des différentes cellules à cristaux liquides de l'élément 105. Chaque jeu de commande permet de générer une carte spécifique d'indices de réfraction sur la matrice de cristaux liquides. Dans les modes de réalisation décrits, les cellules ne sont pas commandées en obturation / ouverture comme dans un SLM d'un système de type CASSI, mais chaque cellule peut recevoir une tension de commande choisie parmi une série d'au moins trois tensions distinctes, et de préférence parmi une série d'au moins dix tensions distinctes, correspondant à au moins trois, respectivement à au moins dix, indices de réfraction distincts (pour une longueur d'onde donnée). De préférence, l'élément 105 est tel que, pour une commande $C_m$ donnée de l'élément 105, il n'existe pas de discontinuité d'indice de réfraction à la frontière entre deux cellules voisines de la matrice, de façon que la couche de cristaux liquides de l'élément 105 soit perçue comme un élément non discret (c'est-à-dire continu ou analogique). Les M commandes $C_m$ appliquées à l'élément 105 lors des M acquisitions d'images par le capteur 105 sont toutes différentes les unes des autres. A chaque commande $C_m$ de l'élément 105, l'élément 105 présente une fonction d'étalement du point ou PSF (de l'anglais "Point Spread Function") qui varie en fonction de la longueur d'onde des rayons reçus par l'élément 105 (caractère dispersif de l'élément 105). Pour une commande $C_m$ donnée de l'élément 105 et pour une longueur d'onde donnée, la PSF de l'élément 105 forme une tache de diffusion, de préférence irrégulière, pouvant s'étaler sur une pluralité de photodétecteurs du capteur 101 et de préférence sur la majeure partie de la surface du capteur 101 (caractère diffusant de l'élément 105). Si on définit la PSF de l'élément 105, à une longueur d'onde donnée, par l'image de la tâche, dans le plan du capteur 101, résultant de la diffusion par l'élément 105 d'un faisceau provenant d'une source lumineuse ponctuelle à cette longueur d'onde, les commandes $C_m$ sont de préférence choisies de façon que les MxK PSF de l'élément 105 (où K est un nombre entier supérieur à 1 correspondant au nombre de bandes spectrales de l'image hyperspectrale que l'on souhaite acquérir) soient suffisamment décorrélées les unes des autres. A titre d'exemple, un groupe de M commandes de l'élément 105 peut être sélectionné parmi un groupe de commandes générées sur la base de polynômes de Zernike de façon à minimiser le maximum d'intercorrélation et le maximum d'autocorrélation des PSF. A titre d'exemple, un groupe de commandes adapté pour une longueur d'onde donnée peut être sélectionné, puis un biais adapté à minimiser la corrélation des PSF dans l'axe spectral peut être déterminé pour chaque commande du groupe. De préférence, pour une commande donnée, la déviation spectrale de la PSF entre deux bandes spectrales successives de l'image hyperspectrale à acquérir est inférieure ou égale à un pixel du capteur, de façon à éviter certains artefacts spectraux. Du point de vue de l'acquisition compressive, on peut en outre chercher à minimiser la cohérence mutuelle entre la matrice d'acquisition (relative aux PSF) et la base dans laquelle les images hyperspectrales que l'on souhaite acquérir sont parcimonieuses. Par ailleurs, pour définir des commandes permettant de générer des PSF orthogonales pour une longueur d'onde donnée, on peut effectuer une analyse en composantes principales non négatives d'un groupe de PSF générées à partir de commandes issues de polynômes de Zernike. Il est alors possible de revenir aux commandes associées aux PSF orthogonales à l'aide d'un algorithme permettant de retrouver les fronts d'onde correspondant aux PSF générées.

Les commandes $C_m$ sont de préférence choisies de façon que, pour une commande $C_m$ donnée et pour une longueur d'onde donnée, la PSF de l'élément 105 soit sensiblement la même en tout point de l'élément 105. En d'autres termes, les commandes $C_m$ sont de préférence choisies de façon que, pour une commande $C_m$ donnée et pour une longueur d'onde donnée, l'image résultante de l'objet dans le plan du capteur 101 corresponde à la convolution de l'image de l'objet par un noyau de convolution correspondant à la PSF associée à la commande $C_m$ considérée et à la longueur d'onde considérée. Si ce n'est pas le cas, une correction de la distorsion peut être incorporée à l'algorithme de reconstruction de l'image hyperspectrale. On notera que cette distorsion peut dépendre de plusieurs paramètres parmi lesquels la discrétisation de l'élément dispersif 105, sa taille et sa forme ainsi que l'influence de son gradient en température le cas échéant. L'homme de l'art saura adapter les systèmes optiques annexes employés afin de minimiser leurs impacts en termes de distorsion tout en prenant en compte l'influence de l'élément 105.

A chaque commande $C_m$ de l'élément 105, différentes cellules à cristaux liquides de l'élément 105 sont commandées pour présenter des indices de réfraction différents (pour chaque longueur d'onde), de façon à créer des décalages de phase du front d'onde en sortie de l'élément 105 (et plus généralement en sortie de l'ensemble du système optique comprenant l'élément 105), permettant de générer des taches de diffusion ou PSF irrégulières. A titre d'exemple les commandes $C_m$ correspondent à des commandes permettant de générer des PSF connues, par exemple des PSF issues d'aberrations du front d'onde correspondant aux polynômes de Zernike ou à une combinaison de ces polynômes. On notera en particulier, à titre d'exemple non limitatif, le cas d'aberrations d'astigmatisme ou d'aberrations sphériques couplées à un biais ou tilt.

Comme cela sera expliqué plus en détail ci-après, les inventeurs ont déterminé qu'à partir des M images floues $y_m$ acquises par le capteur 101 lors de la phase d'acquisition, il est possible de reconstituer une image hyperspectrale x comportant K images élémentaires $x_{\lambda k}$ correspondant aux composantes de l'image x dans les différentes bandes spectrales $\lambda_k$ de l'image x (avec k entier allant de 1 à K). Les calculs permettant de reconstruire l'image hyperspectrale x à partir des M images $y_m$ vont être détaillés ci-après. Ces calculs peuvent être mis en oeuvre soit à l'aide d'un module de calcul intégré au système d'acquisition, soit par une unité de traitement externe.

On supposera ci-après une discrétisation de l'image hyperspectrale x suffisante dans l'axe des différentes bandes spectrales, de telle sorte que le pas de cette discrétisation soit petit devant les variations des signatures spectrales observables sur chaque pixel. Le nombre M d'images $y_m$ nécessaire à la reconstruction de l'image hyperspectrale x dépend du degré de parcimonie de l'image x dans une certaine base de représentation (c'est-à-dire de sa complexité structurelle), de sa résolution spatiale et spectrale, et de la cohérence de la matrice d'acquisition équivalente aux convolutions effectuées par les différentes PSF (plus la corrélation entre les différentes PSF est forte, plus le nombre d'images $Y_m$ nécessaire à la reconstruction de l'image x est élevé).

On désigne ici par $h_{m,\lambda k}$ le noyau de convolution correspondant à l'effet de la PSF de l'élément 105 sur la lumière de la bande spectrale $\lambda k$, lorsque l'élément 105 reçoit la commande $C_m$. Si on considère que les images élémentaires $x_{\lambda k}$ recherchées ont une résolution $P \times Q$ supérieure d'un facteur s à la résolution $P_S \times Q_S$ du capteur 101, avec P, Q, s, $P_S$ et $Q_S$ entiers, $P_S = P/s$ et $Q_S = Q/s$, et si on considère que les MxK PSF de l'élément 105 peuvent être définies avec un niveau de granularité ou pas de discrétisation identique à celui des images $x_{\lambda k}$, chaque image $y_m$ acquise par le capteur 101 peut être exprimée analytiquement par la formule suivante :

$$y_m = D_s \left( \sum_{k=1}^{K} h_{m,\lambda k} * x_{\lambda k} \right),$$

où * représente l'opérateur de convolution (non cyclique), et où $D_S$ désigne un opérateur de décimation par le facteur s, par exemple un opérateur de moyennisation, correspondant à la décimation spatiale, par le capteur 101, de l'image hyperspectrale x. La figure 2 représente une modélisation schématique de cette équation.

Dans un premier temps, on considère que l'on cherche à obtenir une image hyperspectrale x à la même résolution spatiale $P_S \times Q_S$ que le capteur 101, et que les MxK PSF de l'élément 105 peuvent être définies avec un niveau de granularité correspondant à la résolution $P_S \times Q_S$ du capteur. L'opérateur $D_S$ peut donc être omis (cas s = 1). Les opérations de convolution dans le domaine spatial correspondent à des multiplications point à point ou produits de Hadamard dans le domaine de Fourier. L'équation susmentionnée peut alors être approximée comme suit :

$$Y_m = \sum_{k=1}^{K} H_{m,\lambda k} . X_{\lambda k},$$

où '.' représente le produit de Hadamard, $Y_m$ est la transformée de Fourier de l'image $y_m$, $H_{m,\lambda k}$ est la transformée de Fourier du noyau de convolution $h_{m,\lambda k}$ (éventuellement complété par des zéro si les dimensions du noyau $h_{m,\lambda k}$ sont inférieures aux dimensions de l'image $x_{\lambda k}$), et $X_{\lambda k}$ est la transformée de Fourier de l'image élémentaire $x_{\lambda k}$. On notera que les effets de bords peuvent, le cas échéant, être compensés en utilisant des méthodes de type zero-padding, c'est-à-dire en augmentant la taille des matrice et en complétant par des zéros.

Pour chaque pixel de coordonnées spatiales p,q de l'image hyperspectrale x, où p est un entier allant de 1 à P et q est un entier allant de 1 à Q, cette équation peut s'exprimer sous la forme d'une simple multiplication matricielle comme suit :

$$Y(p,q) = G(p,q)X(p,q),$$

où Y(p,q) est un vecteur de dimension M, contenant les M valeurs du pixel de coordonnées p,q dans les M images en transformée de Fourier $Y_m$, X(p,q) est un vecteur de dimension K contenant les K valeurs du pixel de coordonnées p,q dans les K images en transformée de Fourier $X_{\lambda k}$, et G(p,q) est une matrice de dimensions MxK contenant les MxK valeurs des pixels de coordonnées p,q dans les MxK transformées de Fourier $H_{m,\lambda k}$ des noyaux de convolution $h_{m,\lambda k}$.

On considère le cas où le nombre M d'acquisitions effectuées par le capteur 101 est égal au nombre K d'images élémentaires de l'image hyperspectrale x recherchée. Les matrices G(p,q) sont alors des matrices carrées. Si les MxK PSF de l'élément 105 sont suffisamment décorrélées les unes des autres, les matrices carrées G(p,q) peuvent être inversées ou pseudo-inversées. Les M commandes $C_m$ de l'élément 105 sont de préférence choisies de façon que les matrices carrées G(p,q) soient inversables. Chaque vecteur X(p,q) de l'image hyperspectrale en transformée de Fourier peut directement être calculé par une simple multiplication matricielle selon la formule suivante :

$$X(p,q) = G(p,q)^{-1}Y(p,q),$$

où G(p,q)$^{-1}$ désigne la matrice G(p,q) inversée ou pseudo-inversée. Les différentes images élémentaires $x_{\lambda k}$ de l'image hyperspectrale x peuvent alors être reconstruites par de simples opérations de transformée de Fourier inverse.

Plus généralement, que la matrice G(p,q) soit carrée ou non, les M jeux de commandes $C_m$ de l'élément 105 sont de préférence choisis de façon que la matrice d'acquisition, constituée par la concaténation des représentations des différentes PSF dans les domaines spatial et spectral soit de rang maximal par rapport à sa taille. La taille de la matrice d'acquisition est définie pour son nombre de lignes, c'est-à-dire le nombre de données acquises, et son nombre de colonnes, c'est-à-dire le nombre de données que l'on souhaite reconstruire.

Un avantage du système d'acquisition d'images hyperspectrales décrit ci-dessus est qu'il est particulièrement simple et peu encombrant. En particulier, il n'est pas nécessaire de prévoir un mécanisme permettant de changer mécaniquement le filtre optique situé entre le capteur et la scène entre les différentes acquisitions. De plus, la réalisation de l'élément 105 est relativement simple, puisque l'élément 105 ne doit pas réaliser une fonction optique traditionnelle précise de filtrage, mais seulement introduire un flou dans l'image, la seule contrainte étant que les MxK PSF de l'élément 105 présentent un bon niveau de décorrélation les unes par rapport aux autres.

On notera que les matrices G(p,q)$^{-1}$ peuvent être prédéterminées, et stockées dans une mémoire d'un module de reconstruction de l'image hyperspectrale. Les matrices G(p,q)$^{-1}$ peuvent en outre optionnellement être préconditionnées pour éviter certaines erreurs liées aux effets de bord.

Plus généralement, si le nombre de valeurs de pixels effectivement acquises est inférieur au nombre de valeurs de pixels à reconstruire, par exemple si le nombre M d'acquisitions effectuées par le capteur 101 est inférieur au nombre K d'images élémentaires de l'image hyperspectrale x que l'on cherche à reconstruire, et/ou si la résolution spatiale P×Q de l'image hyperspectrale x est supérieure à la résolution pxq du capteur 101 (cas s > 1), l'image x peut être reconstruite à l'aide d'une méthode de régularisation itérative du type utilisé dans le domaine de l'acquisition compressive, correspondant à la résolution d'un problème de minimisation formulé comme suit :

$$argmin_x \left( J(x) + \gamma \sum_{m=1}^{M} \left\| D_s \sum_{k=1}^{K} h_{m,\lambda k} * x_{\lambda k} - y_m \right\|_2^2 \right),$$

où J(x) correspond à un opérateur de régularisation permettant d'exacerber la structure interne de l'image hyperspectrale et $\gamma$ est un paramètre scalaire de régularisation. A titre d'exemple non limitatif, l'opérateur J(x) est basé sur cinq opérateurs de gradients $\nabla_1$, $\nabla_2$, $\nabla_3$, $\nabla_4$ et $\nabla_5$, correspondant à des contraintes qui s'appliquent au cube de dimensions P×Q×K de l'image hyperspectrale x, respectivement dans les directions spatiales verticale (P), horizontale (H) et diagonales et dans la direction spectrale (K), s'exprimant comme suit :

$$(\nabla_1 x)_{p,q,k} = \begin{cases} x_{p+1,q,k} - x_{p,q,k} & ,p < P, \\ 0 & ,p = P, \end{cases}$$

$$(\nabla_2 x)_{p,q,k} = \begin{cases} x_{p,q+1,k} - x_{p,q,k} & ,q < Q, \\ 0 & ,q = Q, \end{cases}$$

$$(\nabla_3 x)_{p,q,k} = \begin{cases} x_{p+1,q+1,k} - x_{p,q,k} & ,p < P \cap q < Q, \\ 0 & ,p = P \cup q = Q, \end{cases}$$

$$(\nabla_4 x)_{p,q,k} = \begin{cases} x_{p+1,q-1,k} - x_{p,q,k} & ,p < P \cap q > 1, \\ 0 & ,p = P \cup q = 1, \end{cases}$$

$$(\nabla_5 x)_{p,q,k} = \begin{cases} x_{p,q,k+1} - x_{p,q,k} & ,k < K, \\ 0 & ,k = K, \end{cases}$$

L'opérateur J(x) peut par exemple être défini par la formule suivante :

$$J(x) = \|\Psi\nabla_5 x\|_1 + \sum_{i=1}^{4} \|\nabla_i x\|_1,$$

où $\Psi$ désigne un opérateur de transformée en ondelettes en deux dimensions choisi.

A titre de variante, l'opérateur J(x) peut prendre d'autres formes. Par exemple, l'opérateur J(x) peut être un opérateur permettant, en utilisant la norme dite nucléaire, de minimiser le nombre de signatures spectrales différentes dans les données reconstruites.

Par ailleurs, plutôt que de reconstruire l'image hyperspectrale complète (une valeur d'intensité par pixel et par bande spectrale), on peut prévoir de reconstruire des données directement exploitables par l'application considérée, par exemple une carte de matériaux, ou des indications quant à la présence ou non de certains phénomènes ou objets dans l'image hyperspectrale.

Un avantage du système et du procédé d'acquisition proposés est qu'ils permettent d'acquérir des images hyperspectrales présentant une résolution spatiale supérieure à celle du capteur et/ou présentant un nombre de bandes spectrales distinctes supérieur au nombre d'acquisitions effectuées par le capteur, de façon particulièrement simple. En particulier, l'acquisition d'une image hyperspectrale présentant une résolution supérieure à celle du capteur peut être effectuée par un système ne comportant pas de prisme ni de dispositif d'obturation matriciel à ouverture codée.

Un autre avantage majeur réside dans le fait que, lors de l'acquisition, aucun filtrage spectral n'est effectué, ce qui implique que le choix des bandes reconstruites ne dépend pas de l'acquisition mais résulte uniquement d'un choix effectué à la reconstruction. Il est ainsi possible, à partir d'une même série de M images $y_m$ d'une scène acquises par le capteur 101, de choisir le nombre et la position des bandes reconstruites. Un compromis est bien entendu souvent à faire entre la taille des bandes spectrales, leur nombre, la résolution spatiale de l'image reconstruite, et la qualité/fiabilité de l'image reconstruite.

Quelle que soit la méthode choisie pour reconstruire l'image hyperspectrale x à partir des M images $y_m$ acquises par le capteur 101, il est nécessaire de connaître les différentes PSF $h_{m,\lambda k}$ de l'élément 105. Les PSF $h_{m,\lambda k}$ peuvent par exemple être déterminées lors d'une phase de calibration du système, ou être déterminées par simulation à partir de modèles de réponse théorique de l'élément 105, ou encore être déterminées par une méthode combinant calibration et simulation.

La figure 3 illustre de façon schématique et partielle le système d'acquisition d'images hyperspectrales de la figure 1 pendant une phase de calibration permettant de déterminer les différentes PSF $h_{m,\lambda k}$ de l'élément 105.

Dans cet exemple, pour la calibration, l'objet 103 de la figure 1 est remplacé par une source lumineuse ponctuelle 303 réglable en longueur d'onde, permettant de balayer successivement les K bandes spectrales $\lambda_k$ des images hyperspectrales que l'on souhaite acquérir. La source 303 est par exemple une source laser réglable en longueur d'onde. Alternativement, la source 303 peut comprendre une source large bande couplée à une pluralité de filtres optiques passe-bande activables individuellement correspondant aux différentes bandes spectrales des images hyperspectrales que l'on souhaite acquérir.

Lors d'une phase de calibration, on peut prévoir, dans un premier temps, d'appliquer à l'élément 105 la commande $C_1$ et de commander la source 303 pour émettre uniquement dans la bande spectrale $\lambda_1$. Une image peut alors être acquise par le capteur 101, définissant la PSF $h_{1,\lambda 1}$ de l'élément 105 pour la commande $C_1$ et pour la longueur

## EP 2 947 433 A1

d'onde $\lambda_1$. L'opération peut être répétée K fois sans modifier la commande de l'élément 105 mais en modifiant à chaque fois la longueur d'onde d'émission de la source, de façon à balayer les K bandes spectrales des images hyperspectrales que l'on souhaite acquérir. L'ensemble de l'opération peut alors être répété M fois en modifiant à chaque fois la commande appliquée à l'élément 105 de façon à balayer les M commandes $C_m$ susceptibles d'être appliquées à l'élément 105 et obtenir ainsi les M x K PSF $h_{m,\lambda k}$ de l'élément 105.

Cette méthode permet d'obtenir des PSF $h_{m,\lambda k}$ présentant un niveau de granularité ou pas de discrétisation identique à celui du capteur 101, et présentant un niveau de bruit correspondant à celui du capteur. Toutefois, il peut être avantageux de définir les PSF $h_{m,\lambda k}$ avec un pas de discrétisation inférieur à celui du capteur et/ou avec un niveau de bruit inférieur à celui de capteur (notamment si on souhaite reconstruire une image hyperspectrale présentant une résolution spatiale supérieure à celle du capteur ou présentant un nombre d'images élémentaires $x_{\lambda k}$ supérieur au nombre d'images $y_m$ acquises par le capteur). Pour cela, les PSF peuvent être déterminées par simulation, à l'aide d'un modèle comportemental théorique de l'élément 105.

Une autre méthode particulièrement avantageuse de détermination des PSF $h_{m,\lambda k}$, combinant calibration et simulation, va maintenant être décrite.

Dans un premier temps, MxK images $hs_{m,\lambda k}$ correspondant aux MxK PSF de l'élément 105 à la résolution du capteur 101, peuvent être acquises en utilisant une source réglable en longueur d'onde selon la méthode de calibration susmentionnée. On prévoit ensuite de mutualiser les informations collectées lors de cette phase d'acquisition pour réduire le bruit et éventuellement augmenter la résolution des PSF acquises.

Pour chaque bande de longueurs d'ondes $\lambda_k$ des images hyperspectrales que l'on souhaite acquérir, un modèle comportemental théorique $h_{\lambda k}(\Omega)$ peut être défini, où $\Omega$ désigne un jeu d'un nombre restreint de paramètres de l'élément 105. Le modèle théorique $h_{\lambda k}(\Omega)$ peut par exemple présenter un pas de discrétisation inférieur à celui du capteur 101.

Pour chaque commande $C_m$ de l'élément 105, on fait correspondre les mesures effectuées $hs_{m,\lambda k}$ avec le modèle comportemental théorique $h_{\lambda k}$ de façon à déterminer un jeu de paramètres $\Omega_m$ définissant le comportement réel de l'élément 105 pour la commande $C_m$. Le jeu $\Omega_m$ peut être déterminé à l'aide d'un algorithme de minimisation d'erreur, par exemple un algorithme itératif, résolvant le problème de minimisation suivant (dans le cas où l'on souhaite diminuer l'effet d'un bruit de type gaussien):

$$\Omega_{\mathrm{m}} = argmin_\Omega \left( C(\Omega) + \gamma \sum_{k=1}^{K} \left\| hs_{m,\lambda k} - D_s h_{\lambda k}(\Omega) \right\|_2^2 \right),$$

où $D_S$ est un opérateur de décimation correspondant au moyennage effectué par le capteur 101 lors de l'acquisition, par rapport à une image présentant la même résolution que le modèle théorique $h_{\lambda k}$, où $\gamma$ est un paramètre scalaire de régularisation, et où $C(Q)$ est un opérateur de contraintes sur un jeu de paramètres $\Omega$.

Chacune des MxK PSF $h_{m,\lambda k}$ de l'élément 105 peut alors être déterminée par la formule suivante:

$$h_{m,\lambda k} = h_{\lambda k}(\Omega_m).$$

Ceci permet de prendre en compte d'éventuelles imperfections du système d'acquisition non modélisables à l'aide d'a priori théoriques. Avantageusement, une fonction I d'interpolation et de lissage peut être appliquée. Les PSF $h_{m,\lambda k}$ de l'élément 105 peuvent alors être déterminées par la formule suivante:

$$h_{m,\lambda k} = h_{\lambda k}(\Omega_m) - I_s \left( hs_{m,\lambda k} - D_s h_{\lambda k}(\Omega_m) \right).$$

Des modes de réalisation particuliers ont été décrits. Diverses variantes et modifications apparaîtront à l'homme de l'art.

En particulier, une nouvelle solution permettant d'acquérir des images hyperspectrales a été proposée. A partir de l'enseignement décrit ci-dessus, l'homme de l'art saura adapter certains aspects de la méthode et du système décrits en fonction de l'application visée. Par exemple, bien que l'on ait représenté sur les figures uniquement des exemples de réalisation dans lesquels l'élément diffuseur et dispersif 105 fonctionne en transmission, les modes de réalisation décrits ne se limitent pas à ce cas particulier. Ainsi, on pourra prévoir un système d'acquisition du type décrit en relation avec les figures 1 à 3, dans lequel l'élément 105 fonctionne en réflexion.

**Revendications**

1.  Système d'acquisition d'une image hyperspectrale (x), comportant :

    un capteur (101) d'images ;
    un élément (105) diffuseur et dispersif placé sur le trajet optique entre le capteur (101) et une scène (103), cet élément (105) comprenant une matrice de cellules à cristaux liquides, chaque cellule étant commandable individuellement pour faire varier son indice de réfraction ;
    un module de commande adapté à commander le capteur (101) et l'élément (105) pour acquérir successivement un nombre entier M supérieur à 1 d'images élémentaires ($y_m$) de la scène (103), en modifiant entre deux acquisitions successives un jeu ($C_m$) de signaux de commande appliqués aux différentes cellules de l'élément (105) ; et
    un module de traitement adapté à reconstruire l'image hyperspectrale (x) à partir des M images élémentaires ($y_m$) acquises par le capteur (101).

2.  Système selon la revendication 1, dans lequel, pour chaque jeu de commandes ($C_m$) appliquée à l'élément (105), l'élément (105) présente des fonctions d'étalement de point ($h_{m,\lambda k}$) différentes pour différentes bandes spectrales ($\lambda_k$) de l'image hyperspectrale (x).

3.  Système selon la revendication 2, dans lequel les M jeux de commandes appliqués à l'élément (105) diffuseur et dispersif sont tels que la matrice d'acquisition, constituée par la concaténation des représentations des MxK fonctions d'étalement de point ($h_{m,\lambda k}$) de l'élément (105), correspondant aux M commandes appliquées et à K bandes spectrales de l'image hyperspectrale (x), avec K entier supérieur à 1, soit de rang maximal par rapport à sa taille.

4.  Système selon la revendication 2 ou 3, dans lequel les M jeux de commandes appliquées à l'élément (105) diffuseur et dispersif sont tels que les MxK fonctions d'étalement de point ($h_{m,\lambda k}$) de l'élément (105), correspondant aux M commandes appliquées et à K bandes spectrales de l'image hyperspectrale (x), avec K entier supérieur à 1, soient toutes différentes les unes des autres.

5.  Procédé de commande d'un système selon l'une quelconque des revendications 1 à 4, comportant une phase d'acquisition au cours de laquelle le capteur (101) et l'élément (105) sont commandés pour acquérir successivement un nombre entier M supérieur à 1 d'images élémentaires ($y_m$) de la scène (103), en modifiant entre deux acquisitions successives le jeu ($C_m$) des signaux de commande appliqués aux différentes cellules de l'élément (105).

6.  Procédé selon la revendication 5, comportant en outre une phase de reconstruction de l'image hyperspectrale (x) à partir des M images élémentaires ($y_m$) acquises pendant la phase d'acquisition.

7.  Procédé selon la revendication 5 ou 6, comportant en outre une phase préalable de calibration au cours de laquelle les MxK fonctions d'étalement de point ($h_{m,\lambda k}$) de l'élément (105), correspondant aux M jeux de commandes appliquées et à K bandes spectrales de l'image hyperspectrale (x), avec K entier supérieur à 1, sont déterminées.

8.  Procédé selon la revendication 7, dans lequel la phase de calibration comprend l'acquisition successivement par le capteur (101) de MxK images de taches résultant de la diffusion, par l'élément (105), pour les M commandes ($C_m$) de l'élément (105) et pour les K bandes spectrales lumineuses de l'image hyperspectrale, d'une source lumineuse (303) ponctuelle réglable en longueur d'onde.

9.  Procédé selon la revendication 8, dans lequel les MxK images acquises lors de la phase de calibration sont mises en correspondance avec un modèle comportemental théorique de l'élément (105).

Fig 1

Fig 2

Fig 3

**Europäisches Patentamt**
**European Patent Office**
**Office européen des brevets**

# RAPPORT DE RECHERCHE EUROPEENNE

Numéro de la demande

EP 15 16 8023

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CHRISTOPHER TEBOW ET AL: "CGH disperser model for a tunable snapshot imaging spectrometer", PROCEEDINGS OF SPIE, SPIE, US, vol. 4647, 16 juin 2002 (2002-06-16), pages 16-21, XP007922989, ISSN: 0277-786X * page 17, alinéa 3 - page 19, alinéa 1 * * figures 2a, 3b * ----- | 1-9 | INV. G01J3/28 ADD. G01J3/12 |
| X | US 2006/038705 A1 (BRADY DAVID J [US] ET AL) 23 février 2006 (2006-02-23) * alinéas [0017], [0018], [0053], [0170], [0181], [0191], [0194], [0195], [0197], [0199], [0211], [0222], [0240], [0002] * ----- | 1,5 | |

| DOMAINES TECHNIQUES RECHERCHES (IPC) |
|---|
| G01J H04N |

Le présent rapport a été établi pour toutes les revendications

| Lieu de la recherche | Date d'achèvement de la recherche | Examinateur |
|---|---|---|
| Munich | 11 septembre 2015 | Jacquin, Jérôme |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 15 16 8023

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-09-2015

| Document brevet cité au rapport de recherche | Date de publication | Membre(s) de la famille de brevet(s) | Date de publication |
|---|---|---|---|
| US 2006038705 A1 | 23-02-2006 | US 2006038705 A1 | 23-02-2006 |
| | | US 2008074291 A1 | 27-03-2008 |
| | | US 2008074292 A1 | 27-03-2008 |
| | | US 2008074663 A1 | 27-03-2008 |
| | | US 2008080773 A1 | 03-04-2008 |
| | | US 2008129568 A1 | 05-06-2008 |

EPO FORM P0460

Pour tout renseignement concernant cette annexe : voir Journal Officiel de l'Office européen des brevets, No.12/82